# EUROPÄISCHE PATENTSCHRIFT

(11) **EP 1 981 699 B1**
(45) Veröffentlichungstag und Bekanntmachung des Hinweises auf die Patenterteilung: **24.07.2013**
(21) Anmeldenummer: 07703147.4
(22) Anmeldetag: 30.01.2007
(51) Int. Cl.: B29C 65/74, B31B 19/84

(54) **VORRICHTUNG UND VERFAHREN ZUR HERSTELLUNG VON KUNSTSTOFFBEUTELN**
DEVICE AND METHOD FOR PRODUCTION OF PLASTIC BAGS
DISPOSITIF ET PROCEDE POUR PRODUIRE DES SACHETS EN PLASTIQUE

(30) Priorität: 01.02.2006 DE 102006004611
(43) Veröffentlichungstag der Anmeldung: 22.10.2008
(73) Patentinhaber: Plümat Plate & Lübeck GmbH & Co., 32339 Espelkamp (DE)
(72) Erfinder: MUTH, Friedrich, 32339 Espelkamp (DE); DIRKS, Peter, 32369 Rahden (DE)
(74) Vertreter: Harrison, Robert John
(86) Internationale Anmeldenummer: PCT/EP2007/000793
(87) Internationale Veröffentlichungsnummer: WO 2007/088026

(56) Entgegenhaltungen:
- WO-A-2006/042710
- DE-A1-102004 051 556
- DE-B3-102004 050 603
- JP-A- 2001 269 389

## Beschreibung

### Gebiet der Erfindung

Die Erfindung liegt auf dem Gebiet der Kunststoffverarbeitung und der Anlagentechnik.

Die Erfindung betrifft eine Vorrichtung und ein Verfahren zur Herstellung von Kunststoffbeuteln mit einem oder mehreren Ports.

### Hintergrund der Erfindung

Kunststoffbeutel, häufig in Form von Folienbeuteln, werden im Bereich der Medizin eingesetzt. Ihre Verwendungsmöglichkeiten sind vielfältig. Kunststoffbeutel können zur Aufnahme von Infusionslösungen dienen und werden u.a. auch für die Aufbewahrung von Blut (Blutkonserven) und die Aufbewahrung von sterilen medizinischen Flüssigkeiten benutzt. Kunststoffbeutel benötigen Befüllungs- und Entnahmesysteme, die als so genannte Ports ausgerührt sind, wobei die Kunststoffbeutel je nach Verwendungszweck ein, zwei oder mehrere Ports aufweisen können. Jeder Port kann, je nach vorgesehener Verwendungsart, eine spezielle Formgebung und/oder individuelle Konstruktionsbestandteile haben.

Kunststoffbeutel mit Ports sind z. B. aus den Schriften DE 196 34 944 C1 und DE 199 58 952 A1 bekannt. Dort werden Herstellungsverfahren beschrieben, bei denen ein einstückiges Einsatzstück aus Kunststoff in den Randbereich eines aus zwei übereinander liegenden Kunststofffolien gebildeten Kunststoffbeutels eingeschweißt wird. Das Einsatzstück besteht aus einem massiven Stück Kunststoff von ausreichender Querschnittsgröße, sodass in dem Einsatzstück wahlweise ein, zwei oder mehrere Ports mit jeweils zylinderförmig kreisrundem Durchströmungsquerschnitt unterzubringen sind. Bei diesem Verfahren besteht allerdings die Gefahr, dass die Kunststofffolien beim Schweißen der Ports in den Beutel gedehnt wird. Die Dehnung der Kunststofffolien führt unter Umständen zu einer Schwächung der Folien und der Schweißnähte, insbesondere im Bereich der Ports.

Ports können in Kunststoffbeuteln mit verschiedenen Arten von Kunststoffelementen realisiert werden. Kunststoffelemente können als extrudierte Schläuche, z.B. aus Polypropylen mit oder ohne eine innere Schicht aus EVA, ausgebildet sein. Kunststoffelemente können auch als Spritzgussteile, z.B. aus Polypropylen, ausgebildet sein.

Die Herstellung von Kunststoffbeuteln erfolgt in bekannter Weise mit einem Herstellungsverfahren, bei dem zwei miteinander zu verschweißende Kunststofffolien einem Schweiß/Schneidwerkzeug zugeführt werden, das ein- oder mehrnutzig sein kann, d.h. dessen Werkzeugform für ein oder mehrere Kunststoffbeutel ausgelegt sein kann. Die Zuführung der miteinander zu verschweißenden Kunststoff-Folien erfolgt in Form von planparallel übereinander liegenden Endlos-Kunststofffolien, die üblicherweise als geblasener Endlos-Schlauch ungeschnitten oder in Bahnen geschnitten von einer Rolle abgezogen und mittels Tänzerwalzen gestreckt gehalten werden, wobei durch bekannte Mittel (z. B. durch eine Folienklemme) sichergestellt ist, dass das Zuführungsende der Kunststofffolien lagegenau an der Eingangsseite des aus zwei Werkzeughälften gebildeten Schweiß/Schneidwerkzeuges positioniert ist.

Sodann werden die Werkzeughälften auseinander gefahren und die Kunststofffolien werden durch das geöffnete Werkzeug hindurchgezogen. Zu diesem Zweck greifen üblicherweise Vakuumsauger durch das geöffnete Werkzeug hindurch und erfassen das an der Eingangsseite des Werkzeuges lagegenau positionierte Zuführungsende der Kunststofffolien und ziehen dieses Zuführungsende bis auf die Ausgangsseite durch das geöffnete Werkzeug hindurch, woraufhin beim oder kurz nach dem Zufahren (Schließen) der Werkzeughälften die Schweißnähte zwischen den Kunststofffolien konturengenau entsprechend der Form des oder der Kunststoffbeutel hergestellt werden und zugleich mittels Trennmesser, die in das Schweiß/Schneidwerkzeug eingebaut sind, die Kunststoffbeutel freigeschnitten und von den noch frischen (unverschweißten) Kunststofffolien abgetrennt werden derart, dass ein neues Zuführungsende der Kunststofffolien an der Eingangsseite des Schweiß-Schneid-Werkzeuges positioniert ist.

Die japanische Patentschrift JP 2001 269389 A offenbart ein Herstellungsverfahren von Kunststoffbeuteln mit Ports. Bei dem Verfahren werden die zu verschweißenden Kunststofffolien und Ports in einem aus zwei Werkzeughälften und einem Kernelement bestehenden Hochfrequenzschweißgeräte miteinander verschweißt, wobei die beiden Werkzeughälften sowie das Kernelement als Elektroden ausgebildet sind. Zum Verschweißen der Folien mit dem Port wird in die Hohlräume der Ports die Kernelektrode eingebracht. Bei geschlossenem Werkzeug wird, in einem ersten Schritt zwischen der oberen Werkzeughälfte und der Kernelektrode, und in einem zweiten Schritt zwischen der unteren Werkzeughälfte und der Kernelektrode, eine hochfrequente Spannung angelegt. Hierbei besteht jedoch die Gefahr, dass die Kunststofffolie zwischen den Ports beim Schweißen gedehnt wird, wodurch unter Umständen zur Schwächung der Folien und Schweißnähte, insbesondere im Bereich der Ports führt.

Eine weitere bekannte Lösung zur Vermeidung des Problems der Bildung von Schwachstellen beim Verschweißen der Ports ist in der deutschen Patentanmeldung Nr. DE 10 2004 050 603 der Firma Plümat + Lübeck GmbH bekannt. In diesem Fall werden Ports mit einem rhombus-förmigen unteren Teil in den Beutel eingesetzt. Somit werden Schwachstellen an den Schweißnähten weitgehend vermieden, da die Kunststofffolie nicht gedehnt wird, um ausreichendes Material für die Abdichtung der runde Kante des Ports sicherzustellen.

Allerdings werden in dieser Lösung andersartige Ports verwendet, was zum Teil nicht erwünscht ist.

### Kurzfassung der Erfindung

Die Aufgabe der Erfindung ist es daher eine Vorrichtung zur Herstellung von Kunststoffbeuteln, welche die Probleme der Schwächung der Beuteln durch Ausdehnung der Kunststofffolien vermeidet.

Diese Aufgabe wird durch eine Vorrichtung zur Herstellung von Kunststoffbeuteln aus Kunststofffolie mit Ports gelöst, wobei die Vorrichtung einen oder mehreren Folienspendem) zur Bereitstellung von Kunststofffolien, einen oder mehreren Portspendern zur Bereitstellung von einem oder mehreren Kunststoffelementen, ein kombiniertes Schweiß/Schneidwerkzeug und ein weiteres Schweißwerkezeug zum Schweißen der Ports aufweist. Das kombinierte Schweiß/Schneidwerkzeug bringt die Kunststoffelemente an die Kunststoffbeutel zur Bildung von Ports, nimmt Zusatzfolie auf und schweißt die Kunststofffolien zusammen. Durch die Aufnahme der Zusatzfolie wird eine zusätzliche Länge der Kunststofffolie bereitgestellt, welch die erforderliche zusätzliche Kunststofffolie für das Zusammenschweißen der Ports ausgleicht.

### Beschreibung der Zeichnungen

Es zeigen:
Fig. 1 zeigt eine Ausführungsform einer Vorrichtung zur Herstellung von Kunststoffbeuteln
Fig. 2 zeigt schematisch einen Kunststoffbeutel mit Port
Fig. 3 zeigt schematisch ein Schneid/Schweißwerkzeug
Fig. 4 zeigt schematisch ein Körperkontur-Schweißwerkzeug;
Fig. 5 zeigt schematisch ein Kopfkontur-Schweißwerkzeug
Fig. 6 zeigt eine weitere Ausführungsform der Erfindung.

### Detaillierte Erfindungsbeschreibung

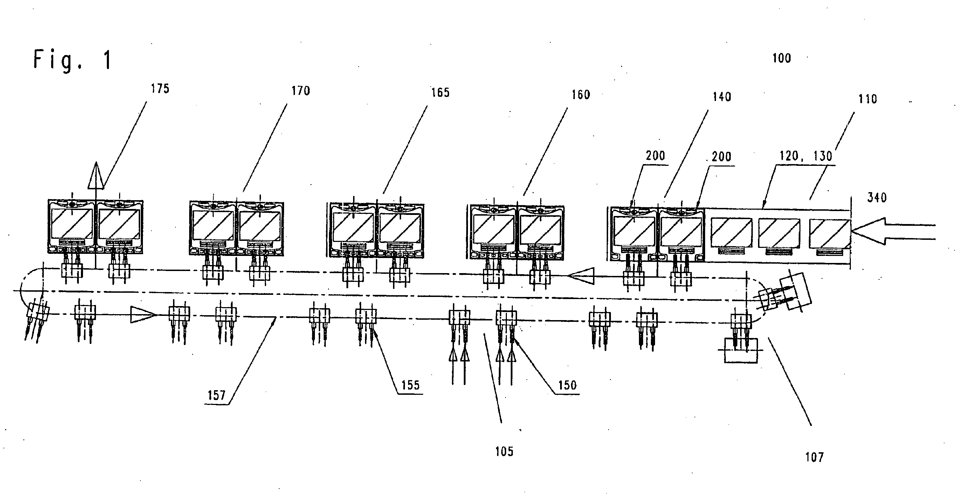

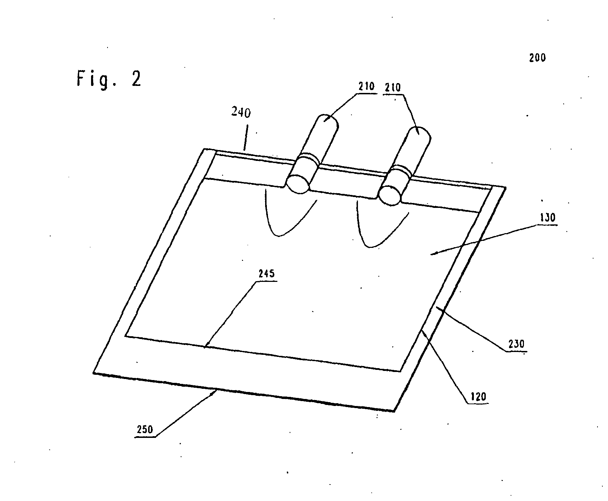

Fig. 1 zeigt beispielhaft eine Vorrichtung 100 zur Herstellung von Kunststoffbeuteln 200 sowie das damit verbundene Herstellungsverfahren. Ein Beispiel eines Kunststoffbeutels 200 ist in Fig. 2 dargestellt. Weitere Figuren zeigen detaillierter einzelne Bestandteile und/oder Verfahrensabläufe der Vorrichtung bzw. des Herstellungsverfahrens.

In Fig. 2 ist ein Kunststoffbeutel 200 mit zwei durch Kunststoffelemente 250 gebildeten Ports 210 dargestellt. In dieser Ausführungsform sind die Kunststoffelemente 250 aus Kunststoffschläuchen gebildet. Die Kunststoffelemente 250 sind zwischen zwei Lagen Kunststofffolie 120, 130 eingeschweißt. Der Kunststoffbeutel 200 hat eine Körperkontur 230 um die drei Seiten, die keine Ports 210 aufweisen, und eine Kopfkontur 240 an der Ports enthaltende Seite. Ein solcher Kunststoffbeutel 200 kann Volumina zwischen typischerweise 100 ml und 3000 ml umfassen. Die innere Umrandung 245 des Kunststoffbeutels 200 ist durch die Verschweißung des Kunststoffbeutels 200 definiert. Die äußere Umrandung 250 ist durch das Schneiden des Kunststoffbeutel 200 definiert.

Die Vorrichtung 100 in Figur 1 umfasst eine Schlauchzuführungsstation 105 zur Zuführung von Schläuchen 150 auf Dornen 155 mit einer Vorwärmstation 107. Die Schläuche 150 bilden später die Ports 210 für die Beutel 200. Zwei Lagen zweier Kunststofffolien 120, 130 werden von einem (nicht dargestellten) Folienspender und über eine Folienzuführung 110 der Vorrichtung 100 zugeführt. Die Kunststofffolien 120, 130 werden dabei von einer Trommel abgerollt. Als Kunststofffolie 120, 130 kann z.B. eine dreischichtige Polypropylenfolie dienen.

Eine dreischichtige Polypropylenfolie kann aus Polypropylen und Copolymeren gefertigt sein. Eine derartige dreischichtige Polypropylenfolie kann mit einer äußeren Schutzschicht, einer mittleren Barrierenschicht und einer inneren Schicht zum Verschweißen koextrudiert werden. In der Vorrichtung 100 liegen die beiden inneren Schichten der beiden Kunststofffolien 120, 130 aufeinander und die zwei Lagen der Kunststofffolien 120, 130 sind zusammen auf der Trommel aufgerollt. Die Kunststofffolien 120, 130 können auch aus Polyethylen oder EVUH bestehen.

Die Vorrichtung 100 hat weiter ein Schweiß-/Schneidewerkzeug 140 zum Schweißen der Köperkonturen 230 der Beutel 200 und zur Einführung der Ports 210 zwischen den zwei Lagen 120, 130 von Kunststofffolien 120, 130. Eine Kopfkonturschweißstation 160 schweißt die Kopfkonturen 240 der Beutel 200 und eine Schlauchschweißstation 170 schweißt die Schläuche 150 in die Beutel 200. In der Abkühlstation 170 werden die Schläuche 150 abgekühlt, bevor die Beutel 200 von der Vorrichtung 100 bei einer Beutelausführstation 175 ausgeführt werden. In der abgebildet Ausführungsform werden gleichzeitig zwei Beutel 200 mit jeweils zwei Ports 210 gefertigt. Allerdings kann die Vorrichtung 100 zB zur Herstellung von einzelnen Beuteln 200 mit einem oder mehreren Ports 210 oder für die Herstellung von vier Beuteln mit jeweils zwei Ports 210 verwendet werden.

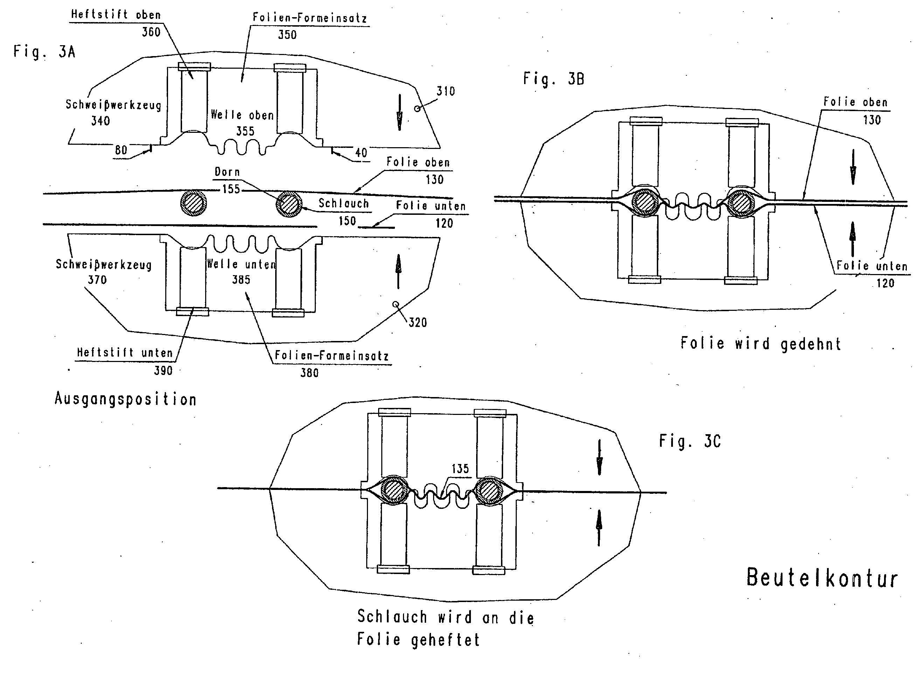

Das erste Schweiß/Schneidwerkzeug 140 ist in Fig. 3a - 3c abgebildet. Es hat eine obere Hälfte 310 und eine im Wesentlichen spiegelbildlich angeordnete untere Hälfte 320.

Von der Folienzuführung 110 gelangen die zwei Lagen Kunststofffolie 120, 130 zum ersten Schweiß/Schneidwerkzeug 140. Ebenfalls in das erste Schweiß/Schneidwerkzeug 140 werden Kunststoffschläuche 150 eingebracht. Die Kunststoffschläuche 150 werden auf Dornen 155 bei der Schlauchzuführungsstation 105 aufgebracht und bilden später die Ports 210 der Kunststoffbeutel 200. Bei einer Vorwärmstation 107 werden die Schläuche 150 erwärmt, um das Herstellungsverfahren zu beschleunigen.

Die Dornen 155 befinden sich fix auf einem Riemen 157 und können mit dem Riemen 157 befördert werden. Der Vorschub der Dornen 155 ist zeitlich mit dem Takt des kombinierten Schweiß/Schneidwerkzeugs 140 koordiniert. Während des Schweiß/Schneidschritts steht der Vorschub still. Das Aufbringen der Kunststoffschläuche 150 auf die Dornen 155 geschieht in der Stillstandsphase während eines Schweiß/Schneidschritts.

Im ersten Schweiß/Schneidwerkzeug 140 werden die Kunststoffschläuche 150 mit einem Endbereich zwischen den zwei Lagen der Kunststofffolien 120, 130 eingebracht. Die Kunststofffolien 120, 130 liegen weitgehend auf dem unteren Schweißwerkzeug 370. Das untere Schweißwerkzeug 370 wird mit Heizelementen auf einer konstanten Temperatur von ungefähr 100 °C gehalten. Diese Temperatur liegt unterhalb der Erweichungstemperatur der Kunststofffolien 120, 130. Dadurch können die Kunststofffolien 120, 130 problemlos über sas untere Schweißwerkzeug 370 gleiten, ohne darauf "anzukleben". Das untere Schweißwerkzeug 370 ist aus hartem und/oder gehärtetem Stahl gefertigt. Das untere Schweißwerkzeug 370 ist auswechselbar und unbeweglich an der Vorrichtung 100 montiert.

In den Bereichen des unteren Schweißwerkzeugs 370, in denen die Kunststoffschläuche 150 zwischen den Kunststofffolien 120, 130 liegen, befinden sich Heftstifte 390 in dem unteren Schweißwerkzeug 370. Die unteren Heftstifte 390 haben jeweils eine Vertiefung, um beim Pressen der oberen Schweißwerkzeugs 340 auf das untere Schweißwerkzeug 370 die Dicke der Kunststoffschläuche 150 auszugleichen. In der dargestellten Ausführungsform nehmen zwei Heftstifte 390 mit zwei Vertiefungen zwei Kunststoffschläuche 150 für einen Kunststoffbeutel 200 auf. Die unteren Heftstifte 390 in dem unteren Schweißwerkzeug 370 sind auswechselbar und unbeweglich an dem unteren Schweißwerkzeug 370 montiert. Die Einsätze 380 können für andere Formen von Kunststoffbeuteln 200 ausgetauscht werden oder wegen Verschleiß ersetzt werden.

Die obere Hälfte 310 des kombinierten Schweiß/Schneidwerkzeugs 140 umfasst einen oberen Folienformeinsatz 350 und ein obere Schweißwerkzeug 340, auf dem eine mit Schweißformen geformte Aluminiumheizplatte 40 und Trennvorrichtungen, die eine Schneidform 80 bilden, montiert sind. Als Trennvorrichtungen dienen messerartige Stahlstücke, die die Kunstststofffolien 120, 130 durchschneiden und so die Kunststoffbeutel 200 aus den Kunststofffolien 120, 130 ausschneiden. Die geformte Aluminiumheizplatte 40 hat eine schnelle Temperaturregelung, mit der Temperaturen, z.B. 140 °C, oberhalb des Schmelzpunktes der verwendeten Materialien der Kunststofffolien 120, 130 eingestellt und gehalten werden können. Die Trennvorrichtungen, welche die Schneidform 80 bilden, sowie die geformte Aluminiumheizplatte 40 können ausgewechselt werden. Durch Auswechseln der Trennvorrichtungen und der Aluminiumheizplatte 40 können unterschiedliche Formen von Kunststoffbeuteln 200 hergestellt werden oder verschlissene Werkzeugteile ersetzt werden. Der obere Folienformeinsatz 350 hat auf der inneren, der zweiten Lage 130 der Kunststofffolien zugewandten Seite 355 eine wellenförmig gebildete Oberfläche.

Die untere Hälfte 320 des kombinierten Schweiß/Schneidwerkzeugs 140 umfasst einen unteren Folienformeinsatz 380 und ein unteres Schweißwerkzeug 370. Das untere Schweißwerkzeug 370 hat ebenfalls eine geformte Aluminiumheizplatte mit einer schnellen Temperaturregelung zur Einstellung der Temperatur. Der untere Folienformeinsatz 380 hat auf der inneren, der ersten Lage 120 der Kunststofffolien 120, 130 zugewandten Seite 385 eine wellenförmig gebildete Oberfläche. Die innere Seite 385 der untere Hälfte 320 ist komplementär zu der inneren Seite 355 der oberen Hälfte 310 geformt, d.h. die Spitzen der Wellen auf den inneren Seiten 355 und 385 passen in den leeren Räumen zwischen den Spitzen auf der jeweiligen anderen inneren Seite 355, 385.

Die obere Hälfte 310 ist an der Vorrichtung 100 mit Pressvorrichtungen verbunden. Dadurch kann die obere Hälfte 310 auf die untere Hälfte 320 gedrückt werden, wie in Fig. 3a-3c abgebildet ist. Fig. 3a zeigt eine erste, offene Position der oberen Hälfte 310 und der unteren Hälfte 320. In einem ersten Arbeitsschritt (Fig. 3a) werden die obere Hälfte 310 und der unteren Hälfte 320 teilweise zusammengedrückt. Dabei berühren die Spitzen der inneren Seite 385 der unteren Hälfte 320 die erste Lage 120 der Kunststofffolie und die Spitzen der inneren Seite 355 der oberen Hälfte 310 die zweite Lage 130 der Kunststofffolie und ziehen eine zusätzliche Folienlänge 135 der Kunststofffolien 120, 130 in den Raum zwischen der oberen Hälfte 310 und der unteren Hälfte 320 ein. Die genaue Länge der zusätzlich eingezogene Kunststofffolie 120, 130 wird vorherbestimmt und die Größe der "Wellen" somit berechnet.

In einem zweiten Arbeitsschritt (Fig. 3c) wird die obere Hälfte 310 auf die untere Hälfte 320 zusammengedrückt. Beim Zusammendrücken werden die, durch die untere Hälfte 320 vorgewärmten, Kunststofffolien 120, 130 entlang einer Köperkontur 230 (Fig. 1) verschweißt und durch die Trennvorrichtungen entlang der Schneidform 40 geschnitten. Dabei werden die Kunststoffschläuche 150 noch nicht vollständig in den Beutel 200 eingeschweißt. Lediglich an den Berührungspunkte zwischen den oberen Heftstiften 360 und den unteren Heftstiften 390 mit dem Kunststofffolie 120, 130 findet ein Verschweißen zwischen den Kunststoffschläuchen 150 und der Kunststofffolie 120, 130 statt.

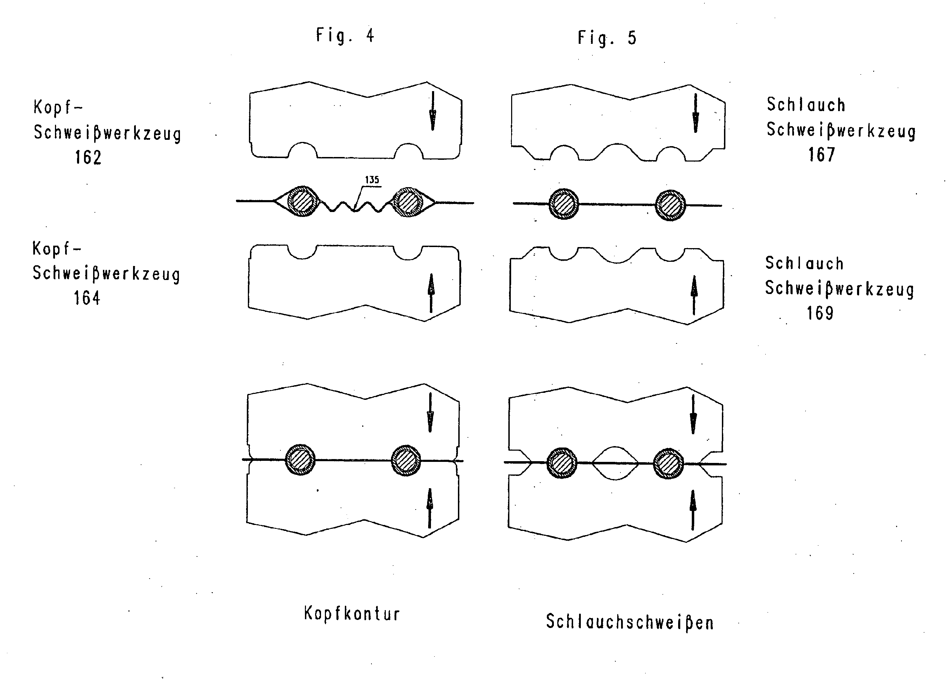

Die teilgefertigten Kunststoffbeutel 200 werden anschließend aus dem kombinierte Schweiß/Schneidwerkzeug 140 mittels der Dornen 155 herausgezogen und in die Kopfkonturschweißstation 160 eingeführt. In der Kopfkonturschweißstation 160 wird die Kopfkontur 240 durch Zusammendrücken eines oberen Schweißwerkzeuges 162 und eines unteren Schweißwerkzeuges 164 (Fig. 4). Aufgrund der zusätzliche Folienlänge 135 bleibt eine ausrechende Menge der Kunststofffolien 120, 130 zwischen den Schläuchen 150, dass eine Ausdehnung der Kunststofffolien (und somit Schwächung) zwischen den Schläuchen 150 nicht erforderlich ist.

Die fast vollständig gefertigten Kunststoffbeutel 200 werden anschließend aus der Kopfkonturstation 160 mittels der Dornen 155 herausgezogen und in die Schlauchschweißstation 160 eingeführt. Die Schlauchschweißstation 160 weist ebenfalls ein oberes Schweißwerkzeug 167 und ein unteres Schweißwerkzeug 169 (Fig. 5) auf und in der Schlauchschweißstation 160 werden die Schläuche 150 fest und somit abgedichtet in den Kunststoffbeuteln 200 eingeschweißt.

Nach Abkühlen der Kunststoffbeuteln 200 in der Abkühlstation werden die Kunststoffbeuteln 200 aus der Vorrichtung 100 bei der Beutelausführstation 175 und in eine Befüllungsanlage (nicht dargestellt) überführt.

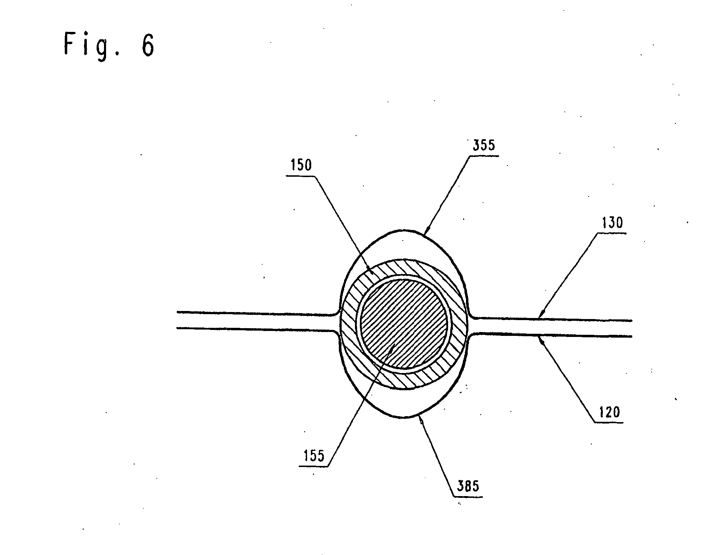

Die Aufnahme einer zusätzlichen Folienlänge 135 lässt sich auch bei einem Folienbeutel mit einem einzelnen Port realisieren. In diesem Fall werden die obere Hälfte 310 und die untere Hälte 320 des Schneid/Schweißwerkzeugs so gestalten, das ein unterer Folienaufnahmeraum 385 und ein oberer Folienaufnahmeraum 355 unmittelbar an dem Kunststoffschlauch (oder Kunststoffelement) 150 gebildet sind. Diese Ausführungsform ist in Fig. 6 dargestellt.

**BEZUGSZEICHENLISTE**

| **Nummer** | **Bezeichnung** |
|---|---|
| 40 | Aluminium Heizplatte |
| 80 | Schneidform |
| 100 | Vorrichtung |
| 105 | Schlauchzuführungsstation |
| 107 | Vorwärmstation |
| 110 | Folienzuführung |
| 120 | Kunststofffolie unter |
| 130 | Kunststofffolie oben |
| 135 | Zusatzfolie |
| 140 | Schweiß-/Schneidwerkzeug |
| 150 | Schlauch/Kunststoffelement |
| 155 | Dorne |
| 157 | Riemen |
| 160 | Kopfkonturscheißstation |
| 162 | Schweißwerkzeug oben |
| 164 | Schweißwerkzeug unten |
| 165 | Schlauchschweißstation |
| 167 | Schweißwerkzeug oben |
| 169 | Schweißwerkzeug unten |
| 170 | Abkühlstation |
| 175 | Beutelausfuhrstation |
| 200 | Kunststoffbeutel |
| 210 | Ports (Befüllungs- und Entnahmesystem) |
| 230 | Körperkontur |
| 240 | Kopfkontur |
| 245 | Innere Umrandung des Kunststoffbeutels |
| 250 | Außere Umrandung |
| | |
| 310 | Obere Hälfte |
| 320 | Untere Hälfte |
| 340 | Schweißwerkzeug oben |
| 350 | Folienformeinsatz oben |
| 355 | Folienaufnahmebereich oben |
| 360 | Heftstifte oben |
| 370 | Schweißwerkzeug unter |
| 380 | Einsatz |
| 385 | Folienaufnahmebereich unter |
| 390 | Heftstifte unten |

## Patentansprüche

1. Vorrichtung (100) zur Herstellung von Kunststoffbeuteln (200) aus Kunststofffolie (120, 130) mit Ports mit
i.) einem oder mehreren Folienspendern (110) zur Bereitstellung von Kunststofffolien (120, 130);
ii.) einem oder mehreren Portspendern zur Bereitstellung von einem oder mehreren Kunststoffelementen (150);
iii.) einem kombinierten Schweiß/Schneidwerkzeug (140) zum
a) Anbringen der Kunststoffelemente (150) an die Kunststoffbeutel (200) zur Bildung von Ports;
b) Aufnehmen von Zusatzfolie (355);
c) Zusammenschweißen der Kunststofffolien (120, 130) an einer Schweißform (40); und
iv.) einem weiteren Schweißwerkzeug (280) zum Schweißen der Ports.

2. Vorrichtung (100) zur Herstellung von Kunststoffbeuteln (200) nach Anspruch 1, wobei das kombinierte Schweiß/Schneidwerkzeug (140) eine Folieaufnahmevorrichtung aufweist.

3. Vorrichtung (100) zur Herstellung von Kunststoffbeuteln (200) nach Anspruch 1 oder 2, wobei das kombinierte Schweiß/Schneidwerkzeug (140) mindestens eine innenseitige, den Kunststofffolien (120,130) zugewandte Oberfläche aufweist, die wellenförmig gebildet ist.

4. Vorrichtung (100) zur Herstellung von Kunststoffbeuteln (200) nach einem der Ansprüche 1 bis 3, wobei die Ausrichtung der Kunststofffolien (120, 130) im kombinierten Schweiß/Schneidwerkzeug (140) im Wesentlichen horizontal ist.

5. Vorrichtung (100) zur Herstellung von Kunststoffbeuteln (200) nach einem der Ansprüche 1 bis 4, wobei das kombinierte Schweiß/Schneidwerkzeug (140) derart gestaltet ist, dass es in einem Fertigungsschritt jeweils zwei Ports an zwei Kunststoffbeuteln (330) anbringt.

6. Vorrichtung (100) zur Herstellung von Kunststoffbeuteln (200) nach einem der Ansprüche 1 bis 5 mit einer Beutelfüllmaschine zur Befüllung der Kunststoffbeutel (200) mit einer Flüssigkeit (220).

7. Vorrichtung (100) zur Herstellung von Kunststoffbeuteln (200) nach einem der Ansprüche 1 bis 6, wobei das kombinierte Schweiß/Schneidwerkzeug (140)
i.) eine untere Hälfte (380) mit einem unteren Folienaufnahmebereich (385) und
ii.) eine obere Hälfte (350) mit einem oberen Folienaufnahmebereich (355) umfasst, wobei der untere Folienaufnahmebereich (385) und der obere Folienaufnahmebereich (355) wellenförmig ausgebildet sind.

8. Vorrichtung nach Anspruch 7, wobei die untere Hälfte (320) des Kombinierten Schweiß/Schneidwerkzeugs (140) einen oder mehrere Einsätze (390) umfasst.

9. Vorrichtung nach einem der Ansprüche 7 oder 8, wobei die obere Hälfte (350) des Kombinierten Schweiß/Schneidwerkzeugs (140) Trennvorrichtungen (80) für eine der mehrere Lagen von Kunststofffolie (120, 130) umfasst.

10. nach einem der Ansprüche 7 bis 9, wobei die obere Hälfte (350) des Kombinierten Schweiß/Schneidwerkzeugs (140) eine Schweißform (40) umfasst.

11. Verfahren zur Herstellung von Kunststoffbeuteln (200), wobei
i.) Kunststofffolien (120, 130) aus einem oder mehreren Folienspendern (340) entnommen werden;
ii.) Kunststoffelemente (150) von einem oder mehreren Portspendern bereitgestellt werden;
iii.) in einem kombinierten Schweiß/Schneidwerkzeug (140)
a) Kunststoffelemente (150) zwischen den Kunststofffolien (120, 130) eingeschoben werden;
b) Eine zusätzliche Länge der Kunststofffolien (120,130) aufgenommen wird;
c) die Kunststofffolien (120, 130) an einer Kontur zusammengeschweißt werden; und
d) die Kunststofffolien (120, 130) geschnitten werden; und
iv.) die Kunststoffelemente (250) an einer Nachschweißstation (280) geschweißt werden.

12. Verfahren nach Anspruch 11, wobei die Kunststofffolie (120, 130) durch das kombinierte Schweiß/Schneidwerkzeug (140) im Wesentlichen horizontal durchgeführt wird.

13. Verfahren nach einem der Ansprüche 11 oder 12, wobei im kombinierten Schweiß/Schneidwerkzeug (140) zwei Kunststoffelemente (150) an einem Kunststoffbeutel (330) angebracht werden.

14. Verfahren nach einem der Ansprüche 11 bis 13, wobei die Aufnahme der zusätzlichen Länge der Kunststofffolien (120, 130) durch ein Ziehen der zusätzlichen Länge zwischen den zwei Kunststoffelementen (150) erfolgt.

15. Verfahren nach einem der Ansprüche 11 bis 14, wobei die Kunststoffbeutel (330) mit einer Flüssigkeit (200) befüllt werden.

## Claims

1. An apparatus (100) for manufacturing plastic bags (200) from a plastic film (120, 130) with ports comprising:
i. one or more film dispenser (110) for providing the plastic film (120, 130);
ii. one or more port dispenser for providing one or more plastic elements (150);
iii. a combined welding/cutting tool (140) for
a) attaching the plastic elements (150) on the plastic bags (200) for the formation of ports;
b) receiving of an additional plastic film (355);
c) welding the plastic film (120, 130) on a welding form (40); and
iv. an additional welding tool (280) for welding the ports.

2. The apparatus (100) for manufacturing the plastic bags (200) according to claim 1, wherein the combined welding/cutting tool (140) having a plastic film receiving device.

3. The apparatus (100) for manufacturing plastic bags (200) according to claim 1 or 2, wherein the combined welding/cutting tool (140) having at least one inner surface, which faces the plastic films (120, 130) and is formed in a wave-like manner.

4. The apparatus (100) for manufacturing plastic bags (200) according to one of the claims 1 to 3, wherein the orientation of the plastic films (120, 130) in the combined welding/cutting tool (140) is substantially horizontal.

5. The apparatus (100) for manufacturing the plastic bags (200) according to one of the claims 1 to 4, wherein the combined welding/cutting tool (140) is formed such that in one single manufacturing step two ports are respectively attached on two plastic bags (330).

6. The apparatus (100) for manufacturing plastic bags (200) according to one of the claims 1 to 5 having a bag-filling machine for filling the plastic bags (200) with a liquid (220).

7. The apparatus (100) for manufacturing plastic bags (200) according to one of the claims 1 to 6, wherein the combined welding/cutting tool (140) comprising:
i. a lower half (380) with a lower plastic film receiving section (385) and
ii. an upper half (350) with an upper plastic film receiving section (355), wherein the lower plastic film receiving section (385) and the upper plastic film receiving section (355) are formed in a wave-like manner.

8. The apparatus (100) according to claim 7, wherein the lower half (320) of the combined welding/cutting tool (140) comprises one or more insets (390).

9. The apparatus (100) according to one of the claims 7 or 8, wherein the upper half (350) of the combined welding/cutting tool (140) comprises a cutting device (80) for one or more layers of the plastic film (120, 130).

10. The apparatus (100) according to one of the claims 7 to 9, wherein the upper half (350) of the combined welding/cutting tool comprises a welding form (40).

11. A method for manufacturing plastic bags (200), wherein
i. plastic films (120, 130) are removed from one or more plastic film dispensers (340);
ii. plastic elements (150) are provided at one or more port dispensers;
iii. in a combined welding/cutting tool (140)
a) plastic elements are slid between the plastic films (120, 130);
b) an additional length of the plastic films (120, 130) is received;
c) the plastic films (120, 130) are welded together on a contour; and
d) the plastic films (120, 130) are cut; and
iv. the plastic elements (152) are welded in a post-welding station (280).

12. The method according to claim 11, wherein the plastic films (120) are passed through the combined welding/cutting tool (140) in a substantially horizontal manner.

13. The method according to one of the claims 11 or 12, wherein at the combined welding/cutting tool (140) two plastic elements (150) are attached on a plastic bag (330).

14. The method according to one of the claims 11 to 13, wherein the reception of the additional length of the plastic films (120, 130) is carried out by pulling the additional length between the two plastic elements (150).

15. The method according to one of the claims 11 to 14, wherein the plastic bags (130) are filled with a liquid (200).

## Revendications

1. Dispositif (100) de fabrication de poches en plastique (200), en film plastique (120, 130), avec des ports, comprenant :
i) une ou plusieurs unités de distribution de films (110) pour la mise à disposition de films plastiques (120, 130) ;
ii) une ou plusieurs unités de distribution de ports, pour la mise à disposition d'un ou plusieurs éléments plastiques (150) ;
iii) un outil combiné de coupe / fusion (140) pour
a) amener les éléments plastiques (150) sur les poches en plastique (200) pour la formation de ports ;
b) recevoir un film supplémentaire (355) ;
c) faire fondre ensemble les films plastiques (120, 130) sur une forme de fusion (40) ; et
iv) un outil de fusion supplémentaire (280) pour la fusion des ports.

2. Dispositif (100) de fabrication de poches en plastique (200) selon la revendication 1, dans lequel l'outil combiné de coupe / fusion (140) comprend un dispositif de réception de film.

3. Dispositif (100) de fabrication de poches en plastique (200) selon la revendication 1 ou 2, dans lequel l'outil combiné de coupe / fusion (140) comprend au moins une surface côté interne, faisant face aux films plastiques (120, 130), qui est en forme de ondulée.

4. Dispositif (100) de fabrication de poches en plastique (200) selon l'une quelconque des revendications 1 à 3, dans lequel l'orientation des films plastiques (120, 130) dans l'outil combiné de coupe / fusion (140) est sensiblement horizontale.

5. Dispositif (100) de fabrication de poches en plastique (200) selon l'une quelconque des revendications 1 à 4, dans lequel l'outil combiné de coupe / fusion (140) est formé de telle façon que, dans une étape de fabrication, l'outil forme respectivement deux ports sur deux poches en plastique (330).

6. Dispositif (100) de fabrication de poches en plastique (200) selon l'une des revendications 1 à 5, avec une machine de remplissage de poche pour le remplissage des poches en plastique (200) avec un liquide (220).

7. Dispositif (100) de fabrication de poches en plastique (200) selon l'une des revendications 1 à 6, dans lequel l'outil combiné de coupe / fusion (140) comprend
i) une moitié inférieure (380) avec une section de réception de film inférieure (385) et
ii) une moitié supérieure (350) avec une section de réception de film supérieure (355),
dans lequel la section de réception de film inférieure (385) et la section de réception de film supérieure (355) sont formées en forme de vague.

8. Dispositif selon la revendication 7, dans lequel la moitié inférieure (320) de l'outil combiné de coupe / fusion (140) comprend un ou plusieurs inserts (390).

9. Dispositif selon l'une des revendications 7 ou 8, dans lequel la moitié supérieure (350) de l'outil combiné de coupe / fusion (140) comprend des dispositifs de séparation (80) pour une ou plusieurs couches de film plastique (120, 130).

10. Dispositif selon l'une des revendications 7 à 9, dans lequel la moitié supérieure (350) de l'outil combiné de coupe / fusion comprend une forme de fusion (40).

11. Procédé de fabrication de poches en plastique (200) dans lequel :
i) des films plastiques (120, 130) sont pris d'une ou plusieurs unités de distribution de film (340) ;
ii) des éléments plastiques (150) sont préparés à partir d'une ou plusieurs unités de distribution de port ;
iii) dans un dispositif combiné de coupe / fusion (140)
a) les éléments plastiques (150) sont glissés entre des films plastiques (120, 130) ;
b) une longueur additionnelle de film plastique (120, 130) est prise ;
c) les films plastiques (120, 130) sont fusionnés ensemble au niveau d'un contour ; et
d) les films plastiques (120, 130) sont coupés ; et
iv) les éléments plastiques (250) sont fusionnés au niveau d'une station de fusion ultérieure (280).

12. Procédé selon la revendication 11, dans lequel les films plastiques (120, 130) sont passés dans une orientation sensiblement horizontale dans l'outil combiné de coupe / fusion (140).

13. Procédé selon l'une des revendications 11 ou 12, dans lequel, dans l'outil combiné de coupe / fusion (140), deux éléments plastiques (150) sont amenés sur une poche plastique (330).

14. Procédé selon l'une quelconque des revendications 11 à 13, dans lequel, la prise de la longueur additionnelle de film plastique (120, 130) est réalisée en tirant la longueur supplémentaire entre les deux éléments plastiques (150).

15. Procédé selon l'une des revendications 11 à 14, dans lequel les poches plastiques (330) sont remplies avec un liquide (200).
